# FASCICULE DE BREVET EUROPEEN

(11) **EP 1 426 587 B1**
(45) Date de publication et mention de la délivrance du brevet: **08.11.2006**
(21) Numéro de dépôt: 03292321.1
(22) Date de dépôt: 22.09.2003
(51) Int. Cl.: F02C 7/045

(54) **Nacelle de réacteur d'aéronef à atténuation acoustique**
Schallgedämpfte Triebwerksgondel eines Flugzeugs
Soundproof aircraft engine nacelle

(30) Priorité: 18.11.2002 FR 0214380
(43) Date de publication de la demande: 09.06.2004
(73) Titulaire: AIRBUS France, 31060 Toulouse (FR)
(72) Inventeur: Porte, Alain, 31770 Colomiers (FR); Batard, Hervé, 31170 Tournefeuille (FR)
(74) Mandataire: Bonnetat, Christian

(56) Documents cités:
- FR-A- 2 347 539
- FR-A- 2 767 560
- FR-A- 2 821 788

## Description

La présente invention concerne une nacelle de réacteur d'aéronef à atténuation acoustique optimisée.

On sait que les réacteurs équipant les aéronefs sont des sources de bruit d'un niveau très élevé. Cela est particulièrement gênant lorsque l'aéronef équipé de ces réacteurs est localisé à proximité d'une zone d'habitations, par exemple lors du décollage ou de l'atterrissage. Les normes environnementales, qui sont de plus en plus restrictives, imposent de limiter le niveau de bruit d'un aéronef et, par voie de conséquence, le niveau de bruit des réacteurs, en dessous d'un seuil réglementaire afin de limiter les nuisances sonores perçues par les habitants de ladite zone. Ce seuil réglementaire est parfois encore réduit pendant la nuit, de telle façon que les aéronefs les plus bruyants ne peuvent alors ni atterrir, ni décoller, ce qui constitue une contrainte, voire un manque à gagner, pour les compagnies aériennes exploitant de tels aéronefs. Par conséquent, il est souhaitable de réduire le niveau de l'émission sonore d'un tel réacteur en dessous desdits seuils réglementaires afin de pouvoir l'exploiter de façon rentable.

On sait de plus qu'une grande partie du bruit engendré par un réacteur d'aéronef provient de la soufflante de ce dernier disposé dans le conduit interne de la nacelle dudit réacteur et que ce conduit interne est constitué par une entrée d'air tubulaire prolongée, d'un côté, par une lèvre périphérique d'entrée d'air évasée, et, de l'autre côté, par une partie tubulaire de transition, la reliant au carter de ladite soufflante et ayant pour objets principaux de permettre un montage et un démontage aisés de ladite entrée d'air et de protéger cette dernière contre l'usure et les dégradations qui résulteraient des objets aspirés par la soufflante.

Comme le montre le document FR-A-2 347 539, il est connu de prévoir, sur la surface interne de ladite entrée d'air, des moyens de revêtement tubulaire interne d'atténuation acoustique, du type résonateur, dont la face interne est en continuité aérodynamique avec la face interne de ladite partie tubulaire de transition et qui permettent de piéger une partie des ondes sonores en provenance de la soufflante et ainsi réduire le niveau de bruit émis par le réacteur vers l'extérieur.

De tels moyens de revêtement tubulaire interne d'atténuation acoustique présentent une structure sandwich à âme(s) alvéolaire(s) et, dans ce document FR-A-2 347 539, sont constitués de deux revêtements acoustiques tubulaires de propriétés acoustiques différentes, disposés en continuité l'un de l'autre.

Chacun de ces deux revêtements, tout comme d'autres revêtements acoustiques connus, pourraient être réalisés en une seule pièce. Toutefois, pour des facilités de construction et de montage, de tels revêtements acoustiques sont le plus souvent réalisés en plusieurs coques, dont chacune d'elles forme une partie longitudinale du revêtement et qui sont assemblées au moyen d'éclisses longitudinales réunissant les bords latéraux en regard de coques adjacentes.

De telles éclisses comportent généralement une bande longitudinale d'éclissage disposée du côté externe du revêtement tubulaire et une bande longitudinale d'éclissage disposée du côté interne de ce dernier. Les bandes longitudinales d'éclissage internes constituent des zones de la surface intérieure de l'entrée d'air dans lesquelles, d'une part, le bruit n'est pas absorbé et, d'autre part, les ondes sonores sont diffractées, ce qui a pour effet de diluer l'énergie acoustique depuis le voisinage de la paroi vers l'axe du réacteur et ainsi dégrader fortement, en terme de réduction du niveau de bruit, les performances d'un tel revêtement par rapport à une pièce monolithique.

Pour tenter d'éviter cet inconvénient, on aménage de façon particulière les bords latéraux des coques adjacentes à solidariser, par exemple en les amincissant de façon continue ou en gradins, ou en y intercalant une âme alvéolaire densifiée, etc ... (voir par exemple les documents antérieurs US-4 850 093, US-4 969 535, US-5 014 815, US-5 025 888 et EP-1 167 185). Dans tous les cas, ces aménagements sont longs, délicats et coûteux.

De toute façon, l'expérience montre que, même avec un revêtement tubulaire d'atténuation acoustique en une seule pièce, l'atténuation ainsi obtenue n'est pas optimale.

L'objet de la présente invention est de remédier à cet inconvénient, d'accroître les performances d'atténuation des moyens de revêtement interne de l'entrée d'air et d'éliminer pratiquement complètement le bruit émis par la soufflante du réacteur.

A cette fin, selon l'invention, la nacelle de réacteur d'aéronef, dont le conduit interne contient une soufflante et comporte :
- une entrée d'air tubulaire comportant des moyens de revêtement tubulaire interne d'atténuation acoustique, de type résonateur ;
- un carter de soufflante tubulaire ; et
- une partie tubulaire de transition, qui relie ladite entrée d'air audit carter de soufflante et dont la face interne est en continuité aérodynamique avec la face interne desdits moyens de revêtement tubulaire interne de ladite entrée d'air, ladite partie tubulaire de transition ayant pour objets principaux de permettre un montage et un démontage aisés de ladite entrée d'air et de protéger cette dernière contre l'usure et les dégradations qui résulteraient des objets aspirés par la soufflante,
- ladite partie tubulaire de transition comportant une face interne est remarquable en ce que :
   - lesdits moyens de revêtement tubulaire interne sont constitués par une unique première pièce tubulaire ne comportant aucune éclisse d'assemblage interne et en ce que la face interne et ladite première pièce tubulaire sont acoustiquement homogènes.

Dans les présentes, les expressions "acoustiquement homogène" et "acoustiquement inhomogène" signifient respectivement "ayant" ou "n'ayant pas" "une composition parfaitement uniforme en ce qui concerne la réception et la propagation des sons".

On remarquera à ce propos que les moyens de revêtement tubulaire interne d'atténuation acoustique prévus dans l'entrée d'air de la nacelle décrite dans le document FR-A-2 347 539 ne peuvent être acoustiquement homogènes, puisqu'ils sont constitués de deux revêtements de propriétés acoustiques différents.

L'idée de base de la présente invention résulte de la constatation qu'une inhomogénéité acoustique sur le trajet du bruit engendré par la soufflante, entre la soufflante et la première pièce tubulaire d'atténuation acoustique, réduit l'efficacité de cette dernière. Ainsi, ladite partie tubulaire de transition, qui est indispensable mais qui ne représente qu'une très faible partie de la surface du conduit interne de la nacelle, est en réalité à l'origine de la limitation des performances des moyens de revêtement tubulaire interne d'atténuation acoustique de l'entrée d'air, ce qui, jusqu'à présent, a échappé à l'attention de l'homme de l'art du fait même de la petitesse de ladite partie tubulaire de transition.

La demanderesse a constaté et vérifié que ladite partie tubulaire de transition --si elle n'est pas acoustiquement homogène-- pollue, notamment par diffraction, l'émission sonore de la soufflante et en modifie les caractéristiques par addition de modes parasites, de sorte que lesdits moyens de revêtement tubulaire interne d'atténuation acoustique de l'entrée d'air reçoivent des ondes déstructurées très différentes de celles qui sont émises par la soufflante, alors qu'ils sont prévus pour atténuer spécifiquement ces dernières. Les performances d'atténuation acoustique de ces moyens ne peuvent donc être bonnes.

En revanche, dans la nacelle de réacteur conforme à la présente invention, grâce à ladite homogénéité acoustique de ladite partie tubulaire de transition, les ondes sonores émises par la soufflante sont sensiblement moins diffractées, de sorte que ladite première pièce interne d'atténuation acoustique de l'entrée d'air reçoit, sans déformations, les ondes (celles émises par la soufflante) qu'elle est chargée d'atténuer. Les performances d'atténuation de ladite première pièce sont donc particulièrement optimales.

Ladite partie tubulaire de transition à face interne acoustiquement homogène peut être en plusieurs pièces ou en une seule pièce et elle peut être métallique, composite, etc ... De préférence, elle est formée par une couronne dont la face interne forme la face interne de ladite partie tubulaire de transition. Avantageusement, cette couronne fait partie intégrante du carter de soufflante.

En variante, ladite partie tubulaire de transition peut comporter une deuxième pièce tubulaire interne d'atténuation acoustique de type résonateur (semblable à ladite première pièce tubulaire interne d'atténuation acoustique de ladite entrée d'air), ladite deuxième pièce tubulaire ne comportant aucune éclisse d'assemblage interne et la face interne de ladite partie tubulaire de transition étant formée par la face interne de ladite deuxième pièce tubulaire.

On remarquera que ladite deuxième pièce interne, non seulement permet d'améliorer les performances de ladite première pièce interne, mais encore participe par elle-même à l'atténuation acoustique des ondes sonores émises par la soufflante.

Avantageusement, ledit carter de soufflante tubulaire comporte une couronne externe le prolongeant du côté de ladite entrée d'air tubulaire et ladite couronne externe entoure ladite deuxième pièce tubulaire interne d'atténuation acoustique de ladite partie tubulaire de transition.

Dans ce cas, ladite couronne externe peut être reliée de façon amovible à ladite entrée d'air ou être solidarisée de ladite première pièce tubulaire interne. Ladite deuxième pièce tubulaire interne peut faire partie intégrante de ladite première pièce tubulaire interne.

Dans le cas général où ladite entrée d'air tubulaire est prolongée, du côté opposé audit carter de soufflante, par une lèvre périphérique d'entrée d'air évasée, on peut encore augmenter l'atténuation des ondes émises par la soufflante, en prévoyant, du côté de la paroi de ladite lèvre d'entrée d'air, une troisième pièce tubulaire interne d'atténuation acoustique, de type résonateur, ne comportant aucune éclisse d'assemblage interne, la face interne de ladite troisième pièce interne étant en continuité aérodynamique de la face interne de ladite première pièce tubulaire interne d'atténuation acoustique.

Le carter de soufflante peut porter, sur sa paroi interne, un revêtement tubulaire d'étanchéité aérodynamique en une matière susceptible d'érosion et disposé en regard des pales de la soufflante, la face interne dudit revêtement d'étanchéité étant en continuité aérodynamique de la face interne de ladite partie tubulaire de transition.

Les figures du dessin annexé feront bien comprendre comment l'invention peut être réalisée. Sur ces figures, des références identiques désignent des éléments semblables.

La figure 1 est une demi-coupe axiale, partielle et schématique, de la partie avant d'une nacelle de réacteur conforme à la présente invention.

La figure 2 correspond à une coupe transversale schématique selon les lignes de coupe A-A, B-B ou C-C de la figure 1.

Les figures 3 et 4 illustrent, en coupe transversale schématique correspondant aux lignes de coupe A-A, B-B ou C-C de la figure 1, deux variantes de la réalisation illustrée par la figure 2.

La figure 5 montre, à échelle agrandie, un mode de réalisation pratique de la partie tubulaire de transition de forme, conformément à la présente invention, pour la nacelle des figures 1 à 4.

Les figures 6 et 7 montrent, de façon semblable à la figure 5, deux variantes de réalisation de la présente invention.

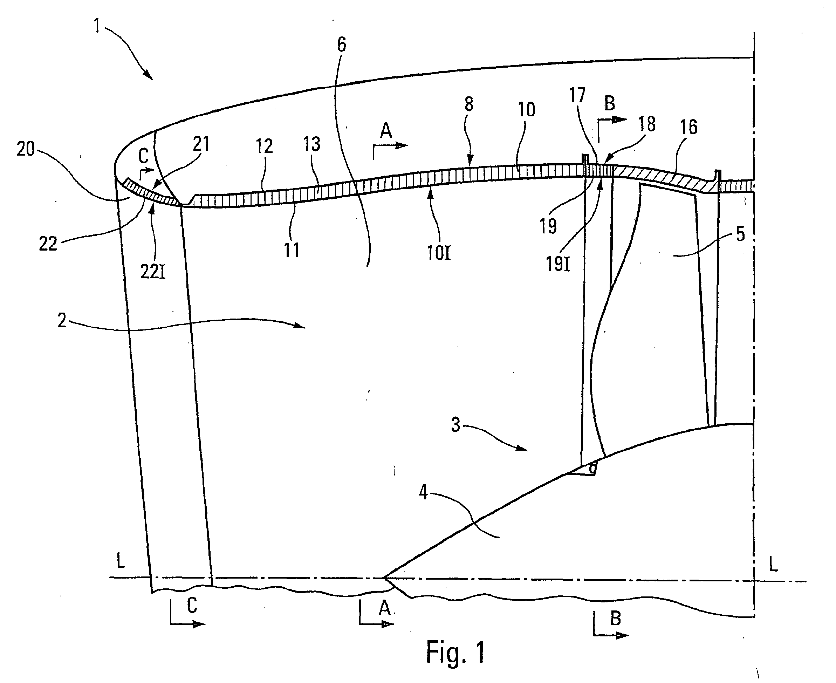

La partie avant de nacelle de réacteur 1 conforme à la présente invention, représentée partiellement et schématiquement sur la figure 1, définit un conduit interne 2 à l'intérieur duquel est disposée une soufflante 3. La soufflante 3 comporte un moyeu rotatif 4 d'axe L-L, pourvu de pales 5.

En avant des pales 5, le conduit interne 2 forme une entrée d'air tubulaire 6.

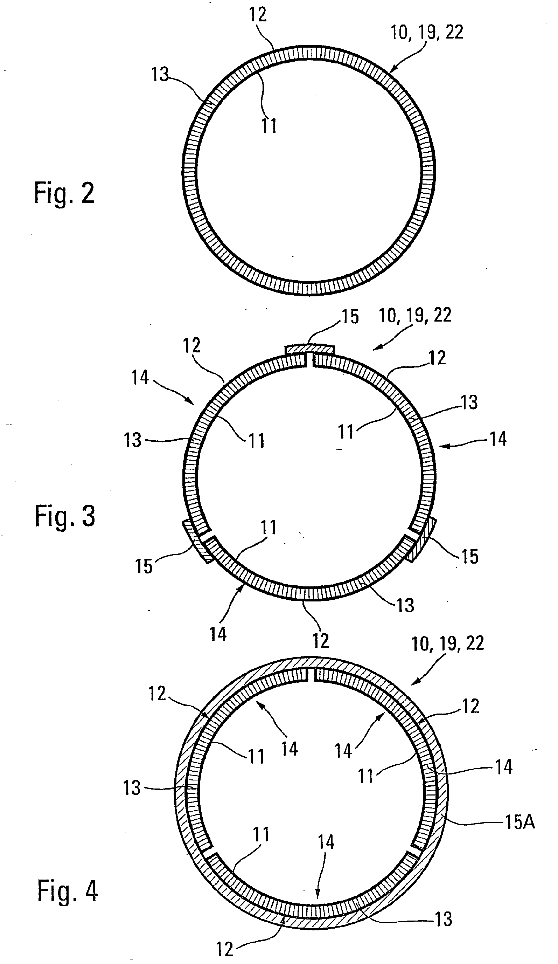

De façon connue, la paroi 8 de l'entrée d'air 6 est formée par des moyens de revêtement tubulaire interne d'atténuation acoustique. Selon l'invention, ces moyens sont constitués par une unique pièce tubulaire 10 comportant une peau interne perméable 11, une peau externe imperméable 12 et une âme alvéolaire 13 interposée entre lesdites peaux interne et externe 11 et 12. La pièce d'atténuation acoustique 10 peut, par exemple, être réalisée en une seule pièce (voir la figure 2) ou en plusieurs coques longitudinales 14, assemblées par des bandes d'éclissage externes 15 (voir la figure 3) ou par une couronne externe 15A (voir la figure 4). Quel que soit son mode de réalisation, la pièce d'atténuation acoustique 10 est acoustiquement homogène et ne comporte aucune éclisse d'assemblage sur sa face interne 10I, constituée par la peau interne 11.

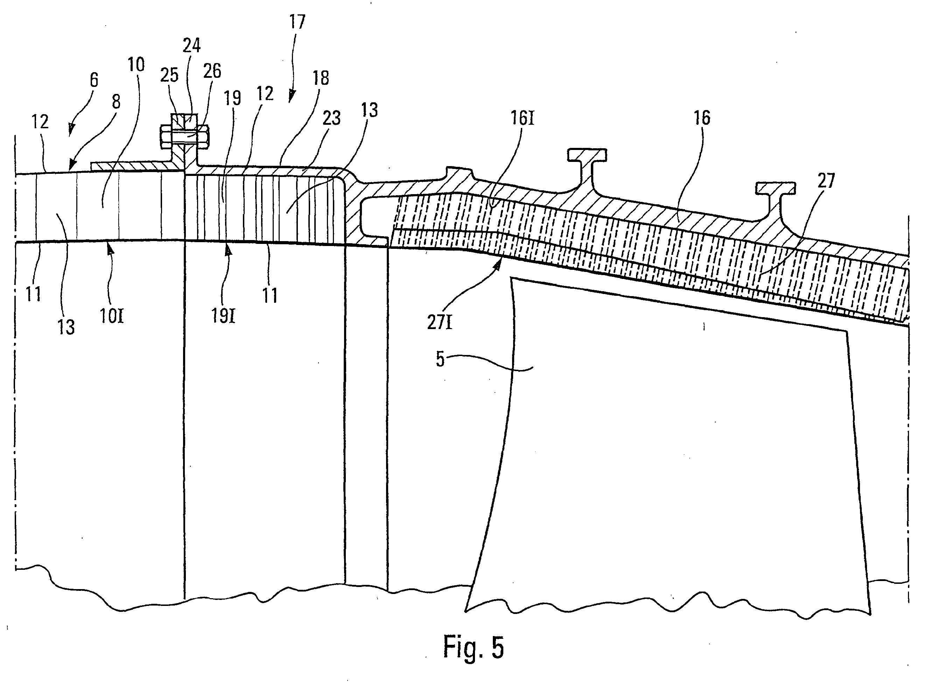

En regard des pales 5 de la soufflante 3, le conduit interne 2 est formé par un carter de soufflante tubulaire métallique 16, qui (comme on le verra ci-après en regard de la figure 5) comporte un revêtement 27 d'une matière susceptible d'érosion sous l'action des matières particulaires absorbées par la soufflante 3, ledit revêtement assurant l'étanchéité aérodynamique avec les extrémités libres des pales 5.

Entre l'entrée d'air 6 et le carter de soufflante 16, le conduit interne 2 est constitué par une partie tubulaire de transition de forme 17, reliant ces deux derniers éléments.

La paroi 18 de la partie de transition de forme 17 comporte une pièce tubulaire d'atténuation acoustique 19, qui, tout comme la pièce tubulaire d'atténuation acoustique 10, comporte une peau interne perméable 11, une peau externe imperméable 12 et une âme alvéolaire 13, interposée entre lesdites peaux interne et externe 11 et 12. La pièce d'atténuation acoustique 19 ne comporte aucune éclisse d'assemblage sur sa face interne 19I, constituée par la peau interne 11. Par ailleurs, ladite face interne 19I de la pièce 19 est en continuité aérodynamique avec la face interne 10I de la pièce 10.

Du côté opposé à la soufflante 3, l'entrée d'air tubulaire 6 est prolongée par une lèvre d'entrée d'air périphérique évasée 20. La paroi 21 de ladite lèvre d'entrée d'air 20 comporte une pièce tubulaire d'atténuation acoustique 22, qui, tout comme les pièces 10 et 19, comporte une peau interne perméable 11, une peau externe imperméable 12 et une âme alvéolaire 13, interposée entre lesdites peaux interne et externe 11 et 12. La pièce d'atténuation acoustique 22 ne comporte aucune éclisse d'assemblage sur sa face interne 221, constituée par la peau 11. De plus, la face interne 221 de la pièce 22 est en continuité aérodynamique avec la face interne 10I de la pièce 10.

Dans le mode de réalisation pratique représenté partiellement et à plus grande échelle sur la figure 5, le carter de soufflante 16 comporte un prolongement externe formant une couronne 23 semblable à la couronne 15A de la figure 4 et constituant la paroi 18 de la partie de transition de forme 17. Cette couronne 23, qui fait partie intégrante du carter de soufflante 16, porte la pièce d'atténuation acoustique 19. A son extrémité disposée du côté de l'entrée d'air tubulaire 6, la couronne 23 est conformée en bride 24. Cette bride 24 est apte à coopérer avec une bride 25, solidaire de la pièce 10, pour solidariser l'entrée d'air 6 et la partie de transition de forme 17, grâce à des moyens de fixation 26.

On remarquera que, en variante, dans le dispositif de la figure 5, la pièce d'atténuation acoustique 19 peut être solidaire de la pièce d'atténuation acoustique 10, par exemple en en étant partie intégrante, et faire saillie au-delà de la bride 25, de sorte que cette pièce acoustique 19 est introduite dans ou sortie de la couronne 23 lors de l'assemblage et du désassemblage de l'entrée d'air 6 et du carter de soufflante 16.

Par ailleurs, sur la figure 5, on a représenté le revêtement tubulaire d'étanchéité érodable 27, porté par la paroi interne 16I du carter de soufflante 16. La face interne 271 du revêtement 27 est en continuité aérodynamique de la face interne 191 de la pièce d'atténuation acoustique 19 de la partie de transition de forme 17.

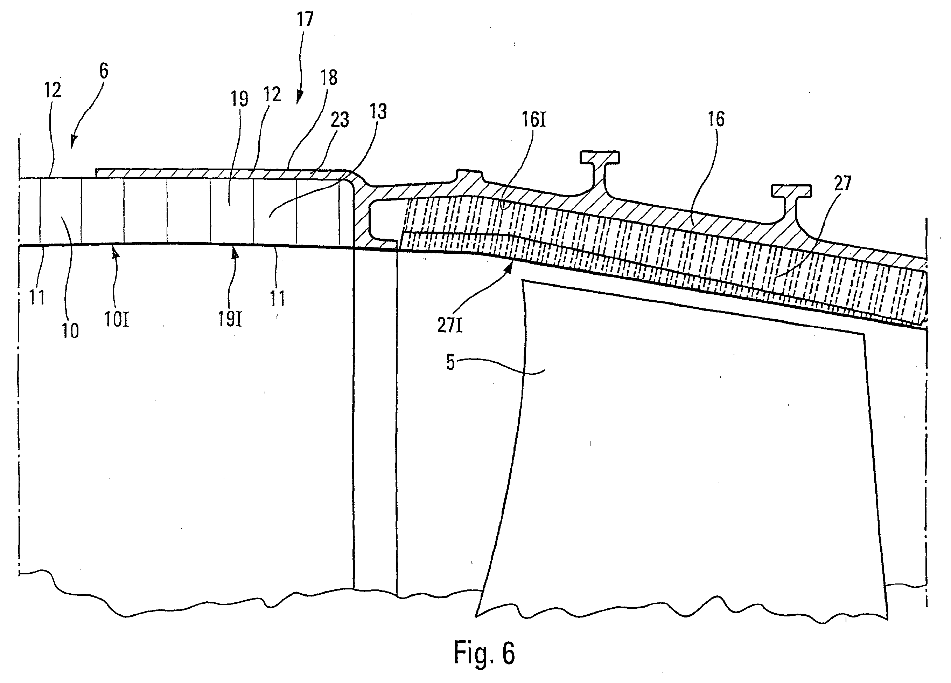

Dans la variante de réalisation montrée par la figure 6, la pièce tubulaire d'atténuation acoustique 19 fait partie intégrante de la pièce tubulaire d'atténuation acoustique 10, en constituant la partie marginale de celle-ci disposée du côté du carter de soufflante 16. De plus, la pièce tubulaire d'atténuation acoustique 10 est rendue solidaire de la couronne 23 --elle-même solidaire du carter de soufflante 16-- par l'intermédiaire de ladite partie marginale 19.

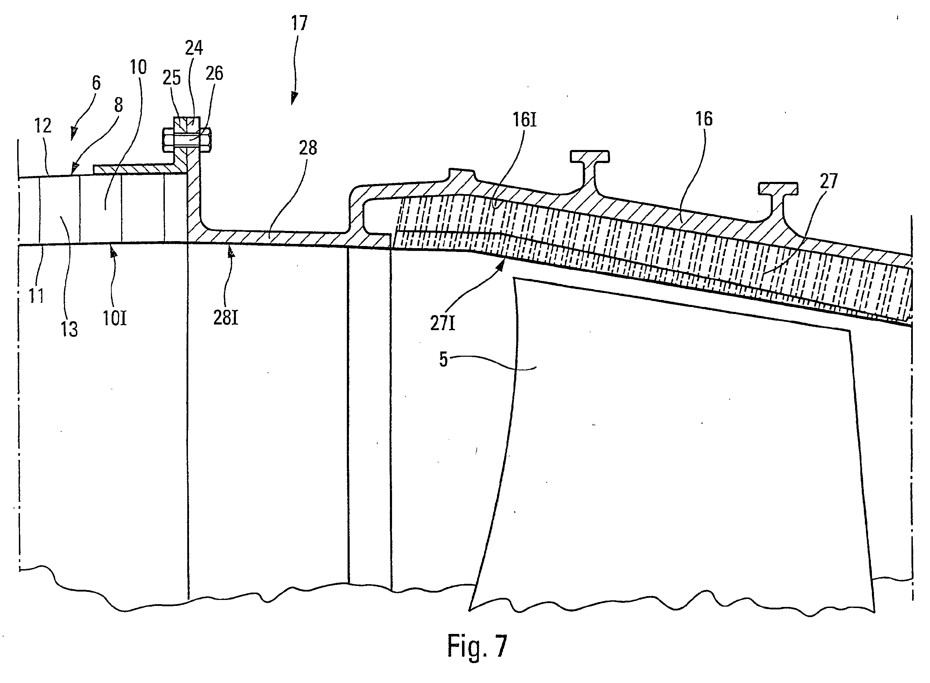

Dans la variante de réalisation de la figure 7, le carter de soufflante 16 comporte, en direction de l'entrée d'air tubulaire 6, un prolongement 28 en forme de couronne en une seule pièce, relié à ladite entrée d'air 6 par les brides 24, 25 et par les moyens de fixation 26. La face interne lisse 281 de la couronne 28 assure la continuité entre la face interne 10I de l'entrée d'air 6 et la face interne 271 du carter de soufflante 16.

## Revendications

1. Nacelle (1) de réacteur d'aéronef, dont le conduit interne (2) contient une soufflante (3) et comporte :
- une entrée d'air tubulaire (6) comportant des moyens de revêtement tubulaire interne d'atténuation acoustique, de type résonateur ;
- un carter de soufflante tubulaire (16) ; et
- une partie tubulaire de transition (17), qui relie ladite entrée d'air (6) audit carter de soufflante (1 6) et dont la face interne est en continuité aérodynamique avec la face interne desdits moyens de revêtement tubulaire interne de ladite entrée d'air (6), ladite partie tubulaire de transition (17) ayant pour objets principaux de permettre un montage et un démontage aisés de ladite entrée d'air (6) et de protéger cette dernière contre l'usure et les dégradations qui résulteraient des objets aspirés par la soufflante,
- ladite partie tubulaire de transition (17) comportant une face interne (19I, 28I) ;
**caractérisée en ce que** :
- lesdits moyens de revêtement tubulaire interne sont constitués par une unique première pièce tubulaire (10) ne comportant aucune éclisse d'assemblage internes. et **en ce que** la face interne (19I, 28I) et ladite première pièce tubulaire (10) sont acoustiquement homogènes.

2. Nacelle de réacteur selon la revendication 1,
**caractérisée en ce que** ladite partie tubulaire de transition (17) est formée par une couronne (28) dont la face interne (28I) forme la face interne de ladite partie tubulaire de transition (17).

3. Nacelle de réacteur selon la revendication 2,
**caractérisée en ce que** ladite couronne (28) fait partie intégrante dudit carter de soufflante tubulaire (16).

4. Nacelle de réacteur selon la revendication 1,
**caractérisée en ce que** ladite partie tubulaire de transition (17) comporte une deuxième pièce tubulaire interne d'atténuation acoustique (19), de type résonateur, qui ne comporte aucune éclisse d'assemblage interne et dont la face interne (19I) forme la face interne de ladite partie tubulaire de transition (17).

5. Nacelle de réacteur selon la revendication 4,
**caractérisée en ce que** ledit carter de soufflante tubulaire (16) comporte une couronne externe (23) le prolongeant du côté de ladite entrée d'air tubulaire (6) et **en ce que** ladite couronne externe (23) entoure ladite deuxième pièce tubulaire interne d'atténuation acoustique (19) de ladite partie tubulaire de transition (17).

6. Nacelle de réacteur selon la revendication 5,
**caractérisée en ce que** ladite couronne externe (23) est reliée de façon amovible à ladite entrée d'air (6).

7. Nacelle de réacteur selon la revendication 5,
**caractérisée en ce que** ladite couronne externe (23) est solidarisée de ladite première pièce tubulaire interne (10).

8. Nacelle de réacteur selon l'une des revendications 5 à 7,
**caractérisée en ce que** ladite deuxième pièce tubulaire interne (19) fait partie intégrante de ladite première pièce tubulaire interne (10).

9. Nacelle de réacteur selon l'une des revendications 1 à 8, dans laquelle ladite entrée tubulaire (6) est prolongée, du côté opposé audit carter (16) de soufflante (3), par une lèvre périphérique d'entrée d'air évasée (20),
**caractérisée en ce que** ladite lèvre d'entrée d'air (20) comporte également une pièce tubulaire interne d'atténuation acoustique (22), de type résonateur, dont la face interne (22) ne comporte aucune éclisse d'assemblage et est en continuité aérodynamique de la face interne (10I) de ladite première pièce tubulaire interne d'atténuation acoustique (10).

10. Nacelle de réacteur selon l'une des revendications 1 à 9, **caractérisée en ce que** ledit carter de soufflante (16) porte, sur sa paroi interne (16I), un revêtement tubulaire d'étanchéité aérodynamique (27) en une matière susceptible d'érosion et disposé en regard des pales (5) de la soufflante (3) et **en ce que** la face interne (271) dudit revêtement d'étanchéité (27) est en continuité aérodynamique de la face interne de ladite partie tubulaire de transition (17).

## Claims

1. An aircraft engine pod (1), the internal duct (2) of which contains a fan (3) and comprises:
- a tubular air intake (6) comprising acoustic-attenuation internal tubular coating means, of resonator type;
- a tubular fan casing (16); and
- a tubular transition part (17), which connects said air intake (6) to said fan casing (16) and the internal face of which is in aerodynamic continuity with the internal face of said tubular coating means of said air intake (6), said tubular transition part (17) having the main objectives of allowing ease of assembly and disassembly of said air intake (6) and of protecting the latter against wear and foreign object damage resulting from objects sucked in by the fan, said tubular transistion part (17) having an internal face (191, 281),
**characterized in that** said internal tubular coating means are formed by a single first tubular piece (10) having no internal assembly fishplate and **in that** the internal face (19I, 28I) and said first tubular piece (10) are acoustically homogeneous.

2. The engine pod as claimed in claim 1,
**characterized in that** said tubular transition-part (17) is formed by an annulus (28), the internal face (28I) of which forms the internal face of said tubular transition part (17).

3. The engine pod as claimed in claim 2,
**characterized in that** said annulus (28) forms an integral part of said tubular fan casing (16).

4. The engine pod as claimed in claim 1,
**characterized in that** said tubular transition part (17) has a second acoustic attenuation internal tubular piece (19) of resonator type, which has no internal assembly fishplate and the internal face (191) of which forms the internal face of said tubular transition part (17).

5. The engine pod as claimed in claim 4,
**characterized in that** said tubular fan casing (16) comprises an external annulus (23) extending it on the same side as said tubular air intake (6) and **in that** said external annulus (23) surrounds said second acoustic attenuation internal tubular piece (19) of said tubular transition part (17).

6. The engine pod as claimed in claim 5,
**characterised in that** said external annulus (23) is connected removably to said air intake (6).

7. The engine pod as claimed in claim 5,
**characterized in that** said external annulus (23) is secured to said first internal tubular piece (10).

8. The engine pod as claimed in anyone of claims 5 to 7,
**characterized in that** said second internal tubular piece (19) forms an integral part of said first internal tubular piece (10).

9. The engine pod as claimed in anyone of claims 1 to 8, in which said tubular intake (6) is extended, on the opposite side to said fan casing (16), by a flared air intake peripheral lip (20),
**characterized in that** said air intake lip (20) also comprises an acoustic attenuation internal tubular piece (22), of resonator type, the internal face (22I) of which has no assembly fishplate and is in aerodynamic continuity with the internal face (10I) of said first acoustic attenuation internal tubular piece (10).

10. The engine pod as claimed in anyone of claims 1 to 9,
**characterized in that** said fan casing (16) bears, on its internal wall (16I), an aerodynamic sealing tubular coating (27) made of a material capable of being eroded and placed facing the blades (5) of the fan (3) and **in that** the internal face (27I) of said sealing coating (27) is in aerodynamic continuity with the internal face of said tubular transition part (17).

## Patentansprüche

1. Triebwerksgondel (1) für ein Flugzeug, deren Innenkanal (2) ein Gebläse (3) enthält und aufweist:
- einen rohrförmigen Lufteinlass (6) mit einer rohrförmigen Innenverkleidung zur Schalldämpfung, in der Bauart eines Resonators;
- ein rohrförmiges Gebläsegehäuse (16); und
- einen rohrförmigen Übergangsbereich (17), der den Lufteinlass (6) mit dem Gebläsegehäuse (16) verbindet und dessen Innenfläche aerodynamisch kontinuierlich mit der Innenfläche der rohrförmigen Innenverkleidung des Lufteinlasses (6) ist, wobei der rohrförmige Übergangsbereich (17) die prinzipielle Aufgabe hat, eine vereinfachte Montage und Demontage des Lufteinlasses (6) zu ermöglichen und diesen gegenüber einer Beschädigung und Abnutzung zu schützen, die sich durch vom Gebläse angesaugte Gegenstände ergeben könnten,
- wobei der rohrförmige Übergangsbereich (17) eine Innenfläche (19I, 28I) aufweist;
**dadurch gekennzeichnet, dass**:
- die rohrförmige Innenverkleidung durch ein erstes rohrförmiges Teil gebildet ist, dass keine innere Montagelasche aufweist, und dass die Innenfläche (19I, 28I) und das erste rohrförmige Teil (10) akustisch homogen sind.

2. Triebwerksgondel nach Anspruch 1,
**dadurch gekennzeichnet, dass** das rohrförmige-Übergangsteil (17) durch einen Kranz (28) gebildet ist, dessen Innenfläche (28I) die Innenfläche des rohrförmigen Übergangsbereichs (17) bildet.

3. Triebwerksgondel nach Anspruch 2,
**dadurch gekennzeichnet, dass** der Kranz (28) einen integrierten Bereich des rohrförmigen Gebläsegehäuses (16) bildet.

4. Triebwerksgondel nach Anspruch 1,
**dadurch gekennzeichnet, dass** der rohrförmige Übergangsbereich (17) ein zweites inneres rohrförmiges Teil (19) zur Schalldämpfung in der Bauart eines Resonators umfasst, das keine innere Montagelasche aufweist und dessen Innenfläche (191) die Innenfläche des rohrförmigen Übergangsbereichs (17) bildet.

5. Triebwerksgondel nach Anspruch 4,
**dadurch gekennzeichnet, dass** das rohrförmige Gebläsegehäuse (16) einen Außenkranz (23) aufweist, der dieses am rohrförmigen Einlass (6) verlängert, und dass der Außenkranz (23) das zweite innere rohrförmige Teil (19) zur Schalldämpfung des rohrförmigen Übergangsbereichs (17) umgibt.

6. Triebswerksgondel nach Anspruch 5,
**dadurch gekennzeichnet, dass** der Außenkranz (23) abnehmbar mit dem Lufteinlass (6) verbunden ist.

7. Triebswerksgondel nach Anspruch 5,
**dadurch gekennzeichnet, dass** der Außenkranz (23) mit dem ersten inneren rohrförmigen Teil (10) fest verbunden ist.

8. Triebswerksgondel nach einem der Ansprüche 5 bis 7,
**dadurch gekennzeichnet, dass** das zweite innere rohrförmige Teil (19) einen integrierten Bereich des ersten rohrförmigen Teils (10) bildet.

9. Triebswerksgondel nach einem der Ansprüche 1 bis 8, in welchem der rohrförmige Einlass (6) an der gegenüber liegenden Seite zu dem Gehäuse (16) des Gebläses (3) durch eine erweiterte umfängliche Lufteiniasslippe (20) verlängert ist,
**dadurch gekennzeichnet, dass** die Lufteinlasslippe (20) auch ein rohrförmiges-inneres Teil (22) zur Schalldämpfung in der Bauart eines Resonators umfasst, dessen Innenfläche (22) keine Montagelasche aufweist und mit der Innenfläche (10I) des ersten inneren rohrförmigen Teils (10) zur Schalldämpfung aerodynamisch kontinuierlich ist.

10. Triebswerksgondel nach einem der Ansprüche 1 bis 9,
**dadurch gekennzeichnet, dass** das Gebläsegehäuse (16) auf seiner Innenwand (16I) eine rohrförmige Verkleidung (27) mit aerodynamischer Dichtigkeit aus einem erosionsbeständigen Material aufweist und in Bezug zu den Flügeln (5) des Gehäuses-(3) angeordnet ist, und dass die Innenfläche (27I) der Dichtigkeitsverkleidung (27) mit der Innenfläche des rohrförmigen Übergangsbereichs (17) aerodynamisch kontinuierlich ist.
